(19) Europäisches Patentamt
European Patent Office
Office européen des brevets

(11) Veröffentlichungsnummer: **0 099 533**
**B1**

(12) # EUROPÄISCHE PATENTSCHRIFT

(45) Veröffentlichungstag der Patentschrift: **18.10.89**

(51) Int. Cl.⁴: **G 11 B 5/702**

(21) Anmeldenummer: **83106771.5**

(22) Anmeldetag: **11.07.83**

(54) **Magnetische Aufzeichnungsträger.**

(30) Priorität: **21.07.82 DE 3227164**

(43) Veröffentlichungstag der Anmeldung: **01.02.84 Patentblatt 84/5**

(45) Bekanntmachung des Hinweises auf die Patenterteilung: **18.10.89 Patentblatt 89/42**

(84) Benannte Vertragsstaaten: **DE FR GB NL**

(56) Entgegenhaltungen:
**EP-A- 0 002 241**
**FR-A- 2 157 904**
**FR-A- 2 284 160**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Lehner, August, Wachenheimer Strasse 4, D-6701 Roedersheim-Gronau (DE)**
Erfinder: **Balz, Werner, Dr., Kropsburgstrasse 44, D-6703 Limburgerhof (DE)**
Erfinder: **Lenz, Werner, Dr., Heinrich-Baermann-Strasse 14, D-6702 Bad Duerkheim (DE)**
Erfinder: **Kopke, Helmut, Goethestrasse 11, D-6714 Weisenheim (DE)**
Erfinder: **Bachmann, Rudolf, Dr., Winklerstrasse 12, D-6710 Frankenthal (DE)**
Erfinder: **Velic, Milan, Dr., Lisztstrasse 117, D-6700 Ludwigshafen (DE)**
Erfinder: **Melzer, Milena, Kirchenstrasse 116, D-6700 Ludwigshafen (DE)**
Erfinder: **Hartmann, Heinrich, Dr., Weinheimer Strasse 46, D-6703 Limburgerhof (DE)**
Erfinder: **Baur, Reinhold, Dr., Strassburger Strasse 15a, D-7600 Offenburg (DE)**

EP 0 099 533 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft magnetische Aufzeichnungsträger aus einem nichtmagnetischen Trägermaterial, das mit einer Magnetschicht auf der Basis von in Bindemitteln dispergiertem, feinteiligem anisotropen magnetischen Material versehen ist und die in der Magnetschicht als Bindemittel OH-gruppenhaltige Polyurethane, die mit Polyisocyanaten vernetzt werden, enthalten.

Magnetische Aufzeichnungsträger sind zur Aufnahme und Wiedergabe von Ton, Bild und Daten in Anwendung. Die ständig steigenden Anforderungen, welche an diese Aufzeichnungsträger gestellt werden, machen weitere Verbesserungen in magnetischer und elektroakustischer Hinsicht nötig. So erfordert die Entwicklung in Richtung höherer Aufzeichnungsdichten bei allen genannten Anwendungsformen die Herstellung immer dünnerer Magnetschichten. Aus diesem Grunde muß sowohl die Packungsdichte des magnetischen Materials in der Magnetschicht, die remanente Magnetisierung in Aufzeichnungsrichtung, die gleichmäßige Verteilung des magnetischen Materials in der Schicht, sowie die Oberflächenglätte und die Gleichmäßigkeit der Schicht in hohem Maße verbessert werden, denn die originalgetreue Speicherung von Signalen stellt hohe Anforderungen an die Qualität einer Magnetschicht. Eine Magnetschicht muß sowohl hohe als auch tiefe Frequenzen amplitudengetreu speichern und wiedergeben können.

Um diese Eigenschaften zu erzielen, muß neben einer extrem gleichmäßigen Verteilung des magnetischen Pigmentes im organischen Bindemittel die Schicht in Aufzeichnungsrichtung magnetisch hochempfindlich sein. Dazu wird die Anisotropie der nadelförmigen Pigmentteilchen ausgenützt. Die flüssige Dispersion aus Magnetpulver und organischer Bindemittellösung wird nach der Beschichtung eines inerten Trägers einem Magnetfeld ausgesetzt, so daß die magnetisierbaren Nadeln in Aufzeichnungsrichtung gedreht werden. Durch den darauf unmittelbar folgenden Trockenvorgang wird die Lage der Teilchen im Bindemittelfilm festgelegt. Ein Maß für die erzielte magnetische Ausrichtung und damit auch für die Empfindlichkeit des Speichers ist das Verhältnis der remanenten Induktion $B_R$ zur Sättigungsinduktion $B_S$ der trockenen Magnetschicht, gemessen in Aufzeichnungsrichtung.

Die Verteilung des magnetischen Pigments im organischen Bindemittel und seine Ausrichtung im magnetischen Feld wird von der Natur des verwendeten Polymeren beeinflußt. Dies tritt besonders stark bei der Verwendung feinteiliger Pigmente in Erscheinung. Die Auswahl an organischen Bindemitteln und ihren Kombinationen für Magnetpulver ist groß. Bekannt ist z.B. die Verwendung von Polyacrylaten, Polyamiden, Polyestern, Polyurethanen, Phenoxyharzen, Mischpolymerisaten aus Vinylchlorid/Acrylnitril und Copolymerisaten aus Vinylchlorid, Vinylacetat und Vinylalkohol. Der größere Teil der aufgeführten Polymeren ist relativ hart und spröde. Die übliche mechanische Beanspruchung der Magnetschicht erfordert jedoch eine elastische, oftmals weichere Einstellung. Daher werden häufig Polyurethanelastomere mit relativ spröden Polymeren, wie Phenoxiharzen, Vinylchlorid-Vinylacetat-Copolymeren, Polycarbonat u.a. kombiniert oder aber Weichmacher in die Schicht eingebracht. Solche Polyurethane werden durch Umsetzung von hydroxylgruppenhaltigen Polyethern oder Polyestern mit Polyisocyanaten hergestellt. Üblicherweise werden Polyesterurethanelastomere, wie sie beispielsweise in der DE-AS 1 106 959 beschrieben sind, oder Polyetherurethanelastomere, wie sie in der US-PS 2 899 411 beschrieben sind, eingesetzt. Zur Verbesserung der Laufeigenschaften werden die oben angeführten Polymermischungen häufig mit Polyisocyanaten vernetzt. Deshalb besitzen auch die mitverwendeten Hartharze häufig OH-Gruppen.

Nachteilig bei der Verwendung dieser Bindemittelsysteme ist jedoch der hohe Lösungsmittelbedarf, die lange Dispergierzeit und ebenso die nötige 2-Phasendispergierung. Außerdem wirken sich in diesen Bindemittelsystemen die besonderen Eigenschaften der magnetischen Materialien nur unbefriedigend aus. Dies zeigt sich durch einen niedrigen Richtfaktor, eine geringe Remanenz und damit durch eine geringe Höhen- und Tiefenempfindlichkeit sowie eine unbefriedigende Aussteuerbarkeit der resultierenden Aufzeichnungsträger.

In der DE-PS 814 225 werden bi- bzw. höherfunktionelle Polyoxyverbindungen, vorzugsweise Polyester, welche noch Hydroxylgruppen tragen, in Kombination mit Polyisocyanaten verwendet. Die dort genannten Stoffe sind an sich jedoch keine Filmbildner, sie stellen niedermolekulare Produkte dar, und neigen deshalb sehr lange zum Blocken, bevor sie ausreagiert sind.

Um die Nachteile von DE-PS 814 225 auszugleichen, wird in der DE-AS 1 130 612 vorgeschlagen, zu dem Polyester-Polyisocyanat-Reaktionslack 5–25% eines hochpolymeren physikalisch trocknenden Lackbindemittels zu mischen. Das Verfahren hat jedoch den Nachteil einer zusätzlichen Lackkomponente. Hierdurch wird der Herstellvorgang um einen Arbeitsschritt erweitert. Außerdem ist eine 2-Stufenmahlung notwendig, um optimale Eigenschaften zu erreichen. Die DE-AS 1 283 282 geht von der gleichen Überlegung aus wie die DE-AS 1 130 612, nur wird dort zum Polyester-Urethan-Reaktionslack Kautschuk zugesetzt.

In der DE-AS 1 571 128 besteht das Bindemittel aus 0 bis 75 Gewichtsprozent eines polymeren Matrizenmaterials, wobei der Rest aus einem Elastomeren besteht. Als polymeres Matrizenmaterial wird mindestens ein Copolymeres einer Gruppe von löslichen hydroxylgruppenhaltigen Harzen mit einem Molekulargewicht von mindestens 2000 verwendet.

Bei der Auswahl der bisher bekannten Bindemittelsysteme bestand jeweils das Ziel, Nachteile und Mängel, wie lange Dispergierzeit, zweiphasige Dispergierung, schlechte Pigmentbenetzung, großer Lösungsmittelbedarf bei der Herstellung

der Dispersionen oder niedriger Richtfaktor, geringe Höhenempfindlichkeit, geringe Tiefenempfindlichkeit, schlechte Aussteuerbarkeit der Tiefen und Höhen und ungenügende Kopierdämpfung der Aufzeichnungsschichten zu beheben oder doch mindestens in dem einen oder anderen Fall günstig zu beeinflussen. Für eine Optimierung reichten die bisher vorgeschlagenen Lösungen nur ungenügend oder teilweise aus.

Es bestand daher die Aufgabe, magnetische Aufzeichnungsträger bereitzustellen, welche durch Verwendung geeigneter Bindemittel, die eine einphasige Dispergierung des magnetischen Materials und kurze Dispergierzeiten bei geringerem Lösungsmitteleinsatz erlauben, sich durch verbesserte elektronische Eigenschaften, insbesondere hinsichtlich Empfindlichkeit und Aussteuerbarkeit sowohl bei hohen als auch bei tiefen Frequenzen, auszeichnen.

Es wurde nun gefunden, daß magnetische Aufzeichnungsträger mit einer auf einer nichtmagnetischen Trägerschicht aufgetragenen Magnetschicht aus einer Dispersion eines anisotropen magnetischen Materials in einem organischen Bindemittel, im wesentlichen bestehend aus einem mit Polyisocyanat vernetzten, OH-gruppenhaltigen Polyurethanbindemittel, wobei das Mengenverhältnis von magnetischem Material zu Bindemittel zwischen 1 bis 10 Gewichtsteilen, bezogen auf ein Gewichtsteil des Bindemittelgemisches liegt, den gestellten Anforderungen genügen, wenn das Polyurethan ein thermoplastisches Polyharnstoffurethan mit einer OH-Zahl zwischen 10 und 120 und einem Molekulargewicht (Zahlenmittel) von 1000 bis 40 000 ist, welches aus

IA. 1 Mol eines Polydiols mit einem Molekulargewicht zwischen 400 und 4000,

IB. 0,2 bis 10 Mol eines Diols mit 2 bis 18 Kohlenstoffatomen,

IC. 0,1 bis 4 Mol eines primären oder sekundären Aminoalkohols mit 2 bis 20 Kohlenstoffatomen und

II. 1,20 bis 13 Mol eines Diisocyanats mit 6 bis 30 Kohlenstoffatomen, wobei der Anteil der NCO-Gruppen des Diisocyanats, bezogen auf die Komponenten IA bis IC, 65 bis 95% der äquivalenten Menge an OH- und NH-Gruppen beträgt,

hergestellt wird, mit der Maßgabe, daß der unpigmentierte vernetzte Film eine Reißfestigkeit nach DIN 53 455 von größer 15 N/mm², eine Reißdehnung nach DIN 53 455 von größer 30%, einen E-Modul nach DIN 53 457 von größer 150 N/mm² und eine Pendelhärte nach DIN 53 157 von 25 bis 140 s aufweist.

In gleicher Weise eignen sich für den erfindungsgemäßen Zweck die entsprechenden Bindemittel, die aus

IA. 1 Mol eines Polydiols mit einem Molekulargewicht zwischen 400 und 4000,

IB. 0,2 bis 9 Mol eines Diols mit 2 bis 18 Kohlenstoffatomen,

IC. 0,1 bis 4 Mol eines primären oder sekundären Aminoalkohols mit 2 bis 20 Kohlenstoffatomen und

ID. 0,01 bis 1 Mol eines Triols mit 3 bis 18 Kohlenstoffatomen und

II. 1,25 bis 13 Mol eines Diisocyanats mit 6 bis 30 Kohlenstoffatomen, wobei der Anteil der NCO-Gruppen des Diisocyanats, bezogen auf die Komponenten IA bis ID, 65 bis 95% der äquivalenten Menge an OH- und NH-Gruppen beträgt,

hergestellt werden.

Die für die erfindungsgemäßen Aufzeichnungsträger geeigneten mit Polyisocyanaten vernetzten OH-gruppenhaltigen Polyharnstoffurethanbindemittel sind dadurch charakterisiert, daß sie als unpigmentierte Filme eine Reißfestigkeit nach DIN 53 455 von größer 15, vorzugsweise größer 25 N/mm², eine Reißdehnung nach DIN 53 455 von größer 30, vorzugsweise größer 50% und einen E-Modul nach DIN 53 457 von größer 150, vorzugsweise größer 200 N/mm², aufweisen und die Pendelhärte nach DIN 53 157 zwischen 25 und 140, vorzugsweise 40 bis 110 s, liegt.

Die gemäß der Erfindung eingesetzten OH-gruppenhaltigen Polyharnstoffurethanbindemittel sind als thermoplastische Polyharnstoffurethane mit einer OH-Zahl von 10 bis 120, vorzugsweise 20 bis 100 und einem Molekulargewicht (Zahlenmittel) von 1000 bis 40 000 zu bezeichnen. Beim Aufbau dieser Polymeren hat es sich als zweckmäßig erwiesen, daß die OH-Endgruppen zum Teil, vorzugsweise über 70% und insbesondere zu mehr als 90% aus folgenden Resten besteht:

$-NH-CO-NR^1-R-OH$ oder

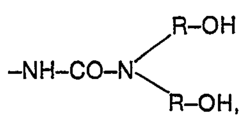

wobei

$R = -(CH_2)_n-$

$R^1 = H, -CH_3, -(CH_2)_n-CH_3$ und

$n = 1$ bis 10

bedeuten.

In dieser Weise aufgebaute Polymere weisen gegenüber solchen ohne diese Endgruppen eine verringerte Thermoplastizität auf. Weiterhin besteht dadurch die Möglichkeit, den Gehalt an OH-Endgruppen zu erhöhen, wodurch sich bei der Vernetzung mit Polyisocyanat der Vernetzungsgrad, entsprechend den Anforderungen an die Magnetschicht, in weiten Grenzen variieren kann. Ebenfalls von Vorteil sind die Harnstoffgruppen, welche die Dispergierfähigkeit gegenüber den üblichen magnetischen Materialien erhöhen.

Zu ihrer Herstellung wird als Komponente IA ein Polydiol mit einem Molekulargewicht von 400 bis 4000, bevorzugt von 700 bis 2500, eingesetzt. Hierzu eignen sich die bekannten Polyesterole, Polyetherole, Polycarbonate und Polycaprolactone.

Die Polyesterole sind zweckmäßigerweise überwiegend lineare Polymere mit endständigen OH-Gruppen, bevorzugt solche mit 2 OH-Endgruppen. Die Säurezahl der Polyesterole ist kleiner als 10 und vorzugsweise kleiner als 3. Die Polyesterole lassen sich in einfacher Weise durch Veresterung von aliphatischen Dicarbonsäuren mit 4 bis 12 C-Atomen, vorzugsweise 4 bis 6 C-Atomen, mit

aliphatischen Glykolen, bevorzugt Glykolen mit 2 bis 12 C-Atomen oder durch Polymerisation von Lactonen mit 3 bis 6 C-Atomen herstellen. Als aliphatische Dicarbonsäuren lassen sich beispielsweise Glutarsäure, Pimelinsäure, Korksäure, Sebacinsäure, Dodecandisäure und vorzugsweise Adipinsäure und Bernsteinsäure einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate, wie Carbonsäureester mit 1 bis 4 Kohlenstoffatomen im Alkoholrest, Carbonsäureanhydride oder Carbonsäurechloride zu verwenden. Beispiele für geeignete Glykole sind Diethylenglykol, Pentandiol-1,5, Decandiol-1,10 und 2,2,4-Trimethylpentandiol-1,5. Vorzugsweise verwendet werden Ethandiol-1,2, Butandiol-1,4, Hexandiol-1,6 und 2,2-Dimethylpropandiol-1,3. Je nach den gewünschten Eigenschaften der Polyurethane können die Polyole allein oder als Mischungen in verschiedenen Mengenverhältnissen verwendet werden. Als Lactone für die Herstellung der Polyesterole eignen sich α,α-Dimethyl-β-propiolacton, γ-Butyrolacton und vorzugsweise ε-Caprolacton.

Die Polyetherole sind im wesentlichen lineare, endständige Hydroxylgruppen aufweisende Substanzen, die Etherbindungen enthalten und ein Molekulargewicht von etwa 600 bis 4000, vorzugsweise von 1000 bis 2000, besitzen. Geeignete Polyetherole können leicht durch Polymerisation von cyclischen Ethern, wie Tetrahydrofuran oder durch Umsetzung von einem oder mehreren Alkylenoxiden mit 2 bis 4 Kohlenstoffatomen im Alkylenrest mit einem Startermolekül, das zwei aktive Wasserstoffatome gebunden enthält, hergestellt werden. Als Alkylenoxide seien beispielsweise genannt: Ethylenoxid, 1,2-Propylenoxid, Epichlorhydrin, 1,2- und 2,3-Butylenoxid. Die Alkylenoxide können einzeln, alternierend nacheinander oder als Mischungen verwendet werden. Als Startermoleküle kommen beispielsweise in Betracht: Wasser, Glykole, wie Ethylenglykol, Propylenglykol, Butandiol-1,4 und Hexandiol-1,6, Amine, wie Ethylendiamin, Hexamethylendiamin und 4,4'-Diamino-diphenylmethan und Aminoalkohole, wie Ethanolamin. Ebenso wie die Polyesterole können auch die Polyetherole allein oder in Mischungen verwendet werden.

Als Komponente IB werden Diole mit 2 bis 18 Kohlenstoffatomen, vorzugsweise 2 bis 6 C-Atomen, eingesetzt, so zum Beispiel Ethandiol-1,2, Propandiol-1,3, Butandiol-1,4, Hexandiol-1,6, Pentandiol-1,5, Decandiol-1,10, 2-Methyl-1,3-propandiol, 2,2-Dimethyl-1,3-propandiol, 2,2-Dimethyl-1,4-butandiol, 2-Methyl-2-butyl-1,3-propandiol, Hydroxypivalinsäureneopentylglykolester, Diethylenglykol, Triethylenglykol und Methyldiethanolamin.

Im Rahmen der Herstellung der OH-gruppenhaltigen Polyharnstoffurethane hat es sich hinsichtlich besonderer Eigenschaften der erfindungsgemäßen Aufzeichnungsträger als zweckmäßig erwiesen, für die Komponente IB ganz oder teilweise Diamine mit 2 bis 15 Kohlenstoffatomen wie Ethylendiamin, 1,6-Hexamethylendiamin, 4,9-Dioxadodecan-1,12-diamin, 4,4'-Diaminodiphenylmethan oder Aminoalkohole wie z.B. Monoethanolamin, Monoisopropanol-4-Methyl-4-aminopentanol-2 einzusetzen.

In gleicher Weise können als Komponente IB die genannten Diole auch ganz oder teilweise durch Wasser oder die nachstehend auch als Komponenten IC angeführten primären oder sekundären Aminoalkohole ersetzt werden.

Diese Aminoalkohole (Komponente IC) mit 2 bis 20, vorzugsweise 3 bis 6 Kohlenstoffatomen, sind u.a. Monoethanolamin, Diethanolamin, Monoisopropanolamin, Diisopropanolamin, Methylisopropanolamin, Ethylisopropanolamin, Methylethanolamin, 3-Aminopropanol, 1-Ethylaminobutanol-2, 4-Methyl-4-aminopentanol-2, N-(2-Hydroxyethyl)anilin. Sekundäre Aminoalkohole sind besonders geeignet, da durch ihre Anlagerung am Kettenende die Löslichkeit der Polymeren verbessert wird. Als besonders günstig haben sich Methylethanolamin, Diethanolamin und Diisopropanolamin erwiesen.

Als Triole (Komponente ID) werden Verbindungen mit 3 bis 18, vorzugsweise 3 bis 6 C-Atomen, angewandt. Beispiele für entsprechende Triole sind Glycerin, Trimethylolpropan und Hexantriol. Geeignet sind auch niedermolekulare Umsetzungsprodukte, z.B. aus Glycerin oder Trimethylolpropan mit Ethylenoxyd und/oder Propylenoxyd. Das Vorhandensein von Triolen bei der Polyaddition führt zu einer Verzweigung des Endproduktes, was sich, sofern keine örtliche Vernetzung auftritt, positiv auf die mechanischen Eigenschaften des Polyurethans auswirkt.

Zur Bildung der OH-gruppenhaltigen Polyharnstoffurethane werden die unter I genannten Komponenten mit aliphatischen, cycloaliphatischen oder aromatischen Diisocyanaten mit 6 bis 30 Kohlenstoffatomen (Komponente II) umgesetzt. Zu diesem Zweck eignen sich besonders Verbindungen wie

Toluylen-2,4-diisocyanat,
Toluylen-2,6-diisocyanat,
m-Phenylendiisocyanat,
4-Chlor-1,3-Phenylendiisocyanat,
1,5-Naphthylendiisocyanat,
1,6-Hexamethylendiisocyanat,
1,4-Cyclohexylendiisocyanat und
1,5-Tetrahydronaphthylendiisocyanat,
Diphenylmethandiisocyanat,
Dicyclohexylmethandiisocyanat oder
Isophorondiisocyanat.

Die OH-gruppenhaltigen Polyurethane auf Basis von Toluylendiisocyanat und Isophorondiisocyanat zeichnen sich durch ihre gute Löslichkeit in Tetrahydrofuran und Dioxan aus. Günstig sind auch Abmischungen von Diisocyanaten, wie z.B. von Toluylendiisocyanat mit Diphenylmethandiisocyanat.

Das Verhältnis der Komponenten I und II zueinander kann von 1,20 bis 13 Mol Diisocyanat je Mol Polydiol bei Verwendung von 0,2 bis 10, vorzugsweise 0,5 bis 5 Mol des geradkettigen aliphatischen Diols mit 2 bis 18 C-Atomen und gegebenenfalls 0,01 bis 1 Mol, vorzugsweise 0,15 bis 0,5 Mol, Triol variiert werden, wobei die Menge des verwendeten geradkettigen Diols teilweise von dem Molekulargewicht des verwendeten Polydiols abhängt. Die Menge des angewandten Isocyanats sollte zu 5 bis 35% im Unterschuß, bezogen auf die Menge der NH- oder hydroxylhaltigen Verbindungen vorliegen, so daß am Ende der Reaktion praktisch kein freies, nicht umgesetztes Isocyanat, aber freie, nicht umgesetzte Hydroxylgruppen verbleiben. Aus praktischen und lacktechnischen Gründen ist es jedoch häufig zweckmäßig, in einer Vorreaktion der Komponenten IA, IB, ID und II einen Diisocyanatüberschuß von 5 bis 40%, bevorzugt 10 bis 30%, bezogen auf die zur vollständigen Umsetzung der Reaktionsteilnehmer erforderliche Menge, zu verwenden, so daß das Verhältnis der Zahl der eingesetzten Hydroxylgruppen zur Zahl der Isocyanatgruppen in dieser Reaktionsstufe ungefähr 1:1,05 bis 1:1,4 vorzugsweise ungefähr 1:1,1 bis 1:1,30 beträgt. In der zweiten Reaktionsstufe wird dann eine dem NCO-Gehalt entsprechende NH-äquivalente Menge der Komponente IC, d.h. 0,1 bis 4, vorzugsweise 0,3 bis 2,5 Mol je Mol der Komponente IA, zugesetzt, bzw. das NCO-Präpolymere wird zum Aminoalkohol gegeben, so daß die Aminogruppen mit dem Isocyanat reagieren. Durch Variation der Aminoalkohole ergeben sich selbst bei Polyurethanen die keine Triole enthalten Polyurethane mit einer OH-Funktionalität zwischen 2 und 4, wobei die OH-Gruppen vorwiegend am Kettenende sind. Verwendet man Polyurethane, in die Triole eingebaut sind, so erhöht sich dadurch die OH-Funktionalität entsprechend. Dieser Aufbau ist für die Filmbildung und für die abschließende Vernetzung des OH-gruppenhaltigen Polyurethans mit dem Polyisocyanat von Vorteil. Wird in dieser zweiten Reaktionsstufe ein geringer Unterschuß an NH- bzw. $NH_2$-Gruppen gegenüber den NCO-Gruppen angeboten, dann wird ein Teil des Aminoalkohols in das Molekül eingebaut und ergibt je nach Aminoalkohol eine Verzweigungsstelle. Verwendet man einen Überschuß an NH-Gruppen, dann wird der Aminoalkohol erst bei der Vernetzungsreaktion völlig in den Polymerverband eingebaut. Damit ist es durch die Auswahl, d.h. durch Variation der Endgruppen, möglich, das Polymere den jeweiligen Anforderungen, wie die Fähigkeit zur Filmbildung und zur Dispergierung, anzupassen.

Die so aufgebauten thermoplastischen, elastischen OH-gruppenhaltigen Polyharnstoffurethane werden bevorzugt in Lösung nach dem 2-Stufenverfahren, gegebenenfalls in Gegenwart von Katalysatoren und anderen Hilfsmitteln und/oder Zusatzstoffen hergestellt. Diese Produkte nach dem lösungsmittelfreien Batch-Verfahren herzustellen, ist auch möglich. Da sich aber aufgrund der eventuellen Anwesenheit des Triols und der Reaktion von Amin mit NCO-Gruppen bei der Substanzpolyaddition zumindest teilweise Gel-Teilchen bilden, wird meist in Lösung gearbeitet. Allgemein wird bei der Lösungspolyaddition die Gefahr einer örtlichen Übervernetzung, wie sie bei der Substanzpolyaddition auftritt, vermieden.

Als Lösungsmittel für die Herstellung der Polyurethane werden vorzugsweise cyclische Ether, wie Tetrahydrofuran und Dioxan, und cyclische Ketone, wie Cyclohexanon, verwendet. Selbstverständlich können je nach Anwendungsgebiet die Polyurethane auch in anderen stark polaren Lösungsmitteln, wie Dimethylformamid, N-Methylpyrrolidon, Dimethylsulfoxid oder Ethylglykolacetat gelöst werden. Ebenso ist es möglich, die genannten Lösungsmittel mit Aromaten, wie Toluol oder Xylol und Estern, wie Ethyl- oder Butylacetat, zu mischen.

Als geeignete Katalysatoren zur Herstellung der Polyurethane und für die Vernetzungsreaktion seien beispielhaft genannt: tert. Amine, wie Triethylamin, Triethylendiamin, N-Methyl-pyridin und N-Methyl-morpholin, Metallsalze, wie Zinnoctoat, Bleioctoat und Zinkstearat und organische Metallverbindungen, wie Dibutylzinndilaurat. Die geeignete Katalysatormenge ist abhängig von der Wirksamkeit des in Frage kommenden Katalysators. Im allgemeinen hat es sich als zweckmäßig erwiesen, 0,005 bis 0,3 Gewichtsteile, vorzugsweise 0,01 bis 0,1 Gewichtsteile für jeweils 100 Gewichtsteile Polyurethan zu verwenden.

Beim 2-Stufenpolyadditionsverfahren wird das Diisocyanat vorgelegt, dann werden die Komponenten IA, IB und ID und gegebenenfalls der Katalysator und die Hilfs- und Zusatzstoffe in Lösungsmittel bei Temperaturen von 20 bis 90 °C, vorzugsweise 30 bis 70 °C, in 0,5 bis 5 Stunden zugegeben. Die Komponenten werden bis zum gewünschten NCO-Gehalt umgesetzt, dann wird in der 2. Stufe die Komponente IC zugesetzt oder die Komponente IC wird vorgelegt und das Polymere zugegeben. Beim 2-Stufenverfahren wird in der ersten Stufe mit einem NCO-Überschuß, gegenüber den Komponenten IA, IB und ID, gearbeitet.

Die weitere Verarbeitung der Lösung des OH-gruppenhaltigen Polyharnstoffurethan-Bindemittels mit magnetischen Materialien und Hilfsstoffen zu magnetischen Aufzeichnungsträgern kann in an sich bekannter Weise erfolgen.

Als anisotrope magnetische Materialien können die an sich bekannten verwendet werden, die die Eigenschaften der resultierenden Magnetschichten wesentlich beeinflussen, wie zum Beispiel Gamma-Eisen(III)-oxid, feinteiliger Magnetit, ferromagnetisches undotiertes oder dotiertes Chromdioxid oder kobaltmodifiziertes Gamma-Eisen(III)-oxid.

Bevorzugt sind nadelförmiges Gamma-Eisen (III)-oxid sowie ferromagnetisches Chromdioxid. Die Teilchengröße beträgt im allgemeinen 0,2 bis 2 µm, bevorzugt ist der Bereich von 0,3 bis 0,8 µm.

In an sich bekannter Weise können die Magnetschichten ferner in kleinen Mengen Zusätze wie Dispergiermittel und/oder Gleitmittel, aber auch Füllstoffe enthalten, die bei der Dispergierung der Magnetpigmente oder bei der Herstellung der Magnetschicht zugemischt werden. Beispiele solcher Zusätze sind Fettsäuren oder isomerisierte Fettsäuren, wie Stearinsäure oder deren Salze mit

Metallen der ersten bis vierten Hauptgruppe des Periodensystems der Elemente, amphotere Elektrolyte, wie Lecithin sowie Fettsäureester oder Wachse, Siliconöle, Ruß usw. Die Menge der Zusätze ist die an sich übliche, sie liegt im allgemeinen unter 10 Gewichtsprozent, bezogen auf die Magnetschicht.

Die genannten OH-gruppenhaltigen Polyharnstoffurethane werden im allgemeinen als alleinige Bindemittel für die Herstellung von Magnetschichten verwendet und zeichnen sich hierbei durch sehr kurze Dispergierzeiten aus. Für ihre Vernetzung kann eine Vielzahl organischer Di-, Tri- oder Polyisocyanate oder Isocyanatprepolymere bis zu einem Molgewicht von 10 000, vorzugsweise zwischen 500 und 3000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanuratbildung entstehen, erwiesen. Besonders günstig ist ein Additionsprodukt von Toluylendiisocyanat an Trimethylolpropan und Diethylenglykol.

Die Menge an zugesetzter Polyisocyanatkomponente kann je nach den an das Aufzeichnungsmaterial gestellten Anforderungen, bezogen auf die OH-Gruppen des zu vernetzenden Polyurethanbindemittels, im Unterschuß von bis zu 70%, vorzugsweise bis zu 50% oder im Überschuß von bis zu 100%, vorzugsweise von bis zu 50%, erfolgen.

Es kann jedoch für spezielle Anwendungszwekke bei magnetischen Aufzeichnungsträgern gemäß der Erfindung vorteilhaft sein, eine zweite Bindemittelkomponente in Mengen von 10 bis 50 Gewichtsteilen, vorzugsweise von 20 bis 40 Gewichtsteilen, bezogen auf die resultierende Gesamtbindemittelmenge, zuzusetzen. Geeignet als weitere Bindemittel sind insbesondere weitgehend mit dem Polyurethanbindemittel verträgliche Vinylchloridpolymere, Phenoxyharze, bevorzugt solche aus Epichlorhydrin und Bisphenol A hergestellte Polykondensate und Polyvinylformalbindemittel oder hochmolekulare nicht reaktive Polyurethanelastomere, wie sie z.B. in der DE-AS 1 106 959 beschrieben sind.

Das Mengenverhältnis von magnetischem Material zu Bindemittel in den erfindungsgemäßen Aufzeichnungsmaterialien liegt zwischen 1 bis 10 und insbesondere 3 bis 6 Gewichtsteilen magnetisches Material auf ein Gewichtsteil des Bindemittels bzw. Bindemittelgemisches. Es ist ein besonderer Vorteil, daß aufgrund des vorzüglichen Pigmentbindevermögens der speziellen Polyurethane hohe Magnetmaterialkonzentrationen in den Magnetschichten möglich sind, ohne daß die mechanisch-elastischen Eigenschaften verschlechtert oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200 µm und insbesondere von 10 bis 36 µm. In neuerer Zeit ist auch die Anwendung von Magnetschichten auf Papierträgern für Zwecke der mittleren Datentechnik bedeutend geworden; auch hierfür lassen sich die erfindungsgemäßen Beschichtungsmassen vorteilhaft verwenden.

Die Herstellung der erfindungsgemäßen magnetischen Aufzeichnungsträger kann in bekannter Weise erfolgen. Zweckmäßig wird die in einer Dispergiermaschine, z.B. einer Topfkugelmühle oder einer Rührwerksmühle, aus dem magnetischen Material und einer Lösung des bzw. der Bindemittel unter Zusatz von Dispergiermitteln und anderen Zusätzen hergestellte Magnetpigmentdispersion nach dem Zumischen des Polyisocyanatvernetzers filtriert und mit der üblichen Beschichtungsmaschine, z.B. mittels eines Linealgießers, auf den nichtmagnetischen Träger aufgetragen. In der Regel erfolgt eine magnetische Ausrichtung, bevor die flüssige Beschichtungsmischung auf dem Träger getrocknet wird; letzteres geschieht zweckmäßigerweise in 2 bis 5 Minuten bei Temperaturen von 50 bis 90 °C. Die Magnetschichten können auf üblichen Maschinen mittels Hindurchführen zwischen geheizten und polierten Walzen, gegebenenfalls bei Anwendung von Druck und Temperaturen von 25 bis 100 °C, vorzugsweise 60 bis 80 °C, geglättet und verdichtet werden. Dabei hat es sich als sehr vorteilhaft erwiesen, die Kalandrierung vorzunehmen bevor die Vernetzung abgeschlossen ist, da die OH-Polymeren im unvernetzten Zustand sehr thermoplastisch sind, ohne hierbei zu verkleben. Die Dikke der Magnetschicht beträgt im allgemeinen 2 bis 20 µm, vorzugsweise 4 bis 10 µm. Im Falle der Herstellung von Magnetbändern werden die beschichteten Folien in der Längsrichtung in den üblichen, meist nach Zoll festgelegten Breiten geschnitten.

Die erfindungsgemäßen magnetischen Aufzeichnungsträger weisen gegenüber solchen, welche mit dem Stand der Technik entsprechenden Polyurethanen bzw. Polyurethanmischungen mit geeigneten härteren Lackharzkomponenten als Bindemittel hergestellt sind, verbesserte elektroakustische Eigenschaften, insbesondere hinsichtlich der Höhen- und Tiefenaussteuerbarkeit als auch der Empfindlichkeit, auf. Außerdem ist wesentlich, daß sich mit dem OH-gruppenhaltigen Polyharnstoffurethan die bekannten magnetischen Materialien in üblichen Dispergiereinrichtungen leicht und vor allem mit sehr geringem Zeit- und Energieaufwand zu homogenen hochpigmentierten Dispersionen verarbeiten lassen. Hervorzuheben ist weiterhin der bis zu 40% geringere Lösungsmittelbedarf beim Dispergierprozeß. Damit können mit Hilfe des mit Polyisocyanat vernetzten OH-gruppenhaltigen Polyharnstoffurethanbindemittels in vereinfachter und verkürzter Arbeitsweise magnetisch und damit auch elektroakustisch wesentlich verbesserte magnetische Aufzeichnungsträger erhalten werden. Ein weiterer Vorteil ist dabei, daß die für die erfindungsgemäßen magnetischen Aufzeichnungsträger geeigneten Polymeren durch die Vernetzung Magnetschichten ergeben, welche auch bei erhöhter Temperatur und Luftfeuchtigkeit beständig sind.

Die in den nachstehenden Beispielen und Vergleichsversuchen genannten Teile und Prozente beziehen sich, soweit nicht anders angegeben, auf das Gewicht. Volumenteile verhalten sich zu Gewichtsteilen wie Liter zu Kilogramm.

Beispiel A

Zu einer Lösung, bestehend aus 108,75 g Toluylendiisocyanat (Isomerenverhältnis 8:2) und 114 g Tetrahydrofuran wird bei 60 °C innerhalb von 2 Stunden eine Lösung von 150 g eines Polyesters mit Molekulargewicht 1000, bestehend aus Adipinsäure und Butandiol-1,4, 31,8 g Diethylenglykol, 4,47 g Trimethylolpropan und 200 g Tetrahydrofuran zugetropft. Vor Zulaufanfang sowie 1 Stunde nach Zulaufende werden jeweils 1 Tropfen Dibutylzinndilaurat zugegeben. Die Lösung wird bei 60 °C gerührt, bis der NCO-Gehalt 1,72% beträgt. Nun wird auf 45 °C abgekühlt und 18,78 g Methylethanolamin zugegeben.

Das resultierende Produkt weist einen Feststoffgehalt von 50%, eine OH-Zahl von 45 und einen K-Wert von 22 bis 24 auf.

Beispiel 1

In einer Stahlkugelmühle von 6 l Rauminhalt, gefüllt mit 8 kg Stahlkugeln mit einem Durchmesser von 4 bis 6 mm, wurden 1000 g eines Codotierten Eisenoxidpigments mit einer Koerzitivfeldstärke von 30 kA/m, 1130 g eines Lösungsmittelgemisches aus gleichen Teilen Tetrahydrofuran und Dioxan, 35 g eines Dispergiermittels, auf der Basis einer Mischung eines Monophosphorsäureesters und dem Salz einer Sulfobernsteinsäure, 335 g einer 50%igen Lösung der hydroxylgruppenhaltigen Polyurethanlösung gemäß Beispiel A in Tetrahydrofuran, 1,0 g eines handelsüblichen Siliconöls, 2,0 g Hydrochinon, 2,0 g n-Butylstearat und 10 g Isostearinsäure 70 Stunden lang dispergiert. Die erhaltene Dispersion wurde unter Druck durch einen Filter mit 5 µm Poren filtriert und unmittelbar vor dem nachfolgenden Auftragen auf eine 12 µm dicke Polyethylenterephthalatfolie mittels eines üblichen Linealgießers unter kräftigem Rühren mit 26,0 g einer 75%igen Lösung eines Triisocyanats aus 3 Mol Toluylendiisocyanat und 1 Mol Trimethylolpropan in Ethylacetat versehen. Die beschichtete Folie wurde nach Durchlaufen eines Magnetfeldes zur Ausrichtung der Magnetpigmentteilchen bei Temperaturen zwischen 50 und 90 °C getrocknet. Nach Trocknung wurde die Magnetschicht durch Hindurchführen zwischen auf 70 °C beheizten Walzen unter einem Liniendruck von 200 kp/cm verdichtet und geglättet und dann in 3,81 mm breite Bänder geschnitten. Die Vernetzungsreaktion verlief während der und kurz nach der Bandherstellung.

Die Messung der magnetischen Eigenschaften wurde in einem Meßfeld von 160 kA/m durchgeführt. Die Oberflächenrauhigkeit wurde als gemittelte Rauhtiefe $R_z$ gemäß DIN 4768, Blatt 1, bestimmt. Bei den Aufzeichnungseigenschaften wurden die elektroakustischen Werte gemäß DIN 45401, 45403 und 45512 (Blatt 12) gegen das Bezugsband IEC 1 geprüft. Die Meßergebnisse sind in folgender Übersicht enthalten:

Nach der Beschichtung, ohne Oberflächenbehandlung:

Rauhigkeit $R_z$: 0,40 µm
Remanente Magnetisierung: 150 mT

Nach der Verdichtung und Glättung durch Satinage:

Rauhigkeit $R_z$: 0,17 µm
Remanente Magnetisierung: 180 mT

Elektroakustische Banddaten (Bezugsband IEC 1):

Tiefenempfindlichkeit $E_T$ 315 Hz (ΔdB): +1,0
Höhenempfindlichkeit $E_H$ 10 kHz (ΔdB): +2,5
Tiefenaussteuerbarkeit $A_T$ 315 Hz (ΔdB): +1,5
Höhenaussteuerbarkeit $A_H$ 10 kHz (ΔdB): +1,5
Magnetschichtdicke: 4,0 µm

Beispiel B

100,05 g Toluylendiisocyanat, gelöst in 107 g Tetrahydrofuran wurden auf 60 °C erhitzt und mit einem Tropfen Dibutylzinndilaurat versetzt. Dazu wurden innerhalb von 2,5 Stunden 150 g eines OH-gruppenhaltigen Polyesters aus Adipinsäure und Butandiol-1,4 mit einem Molekulargewicht von 1000 und 41,2 g Hexandiol gelöst in 200 g Tetrahydrofuran gegeben. Nach einer Stunde wurde nochmals ein Tropfen Dibutylzinndilaurat zugegeben. Nach Erreichen eines NCO-Gehaltes von 1,05% wurde auf 45 °C abgekühlt und danach 15,75% Diethanolamin zugesetzt. Das resultierende Produkt wies einen Feststoffgehalt von 50%, eine OH-Zahl von 55 und einen K-Wert von 24 bis 28 auf.

Beispiel 2

In einer Stahlkugelmühle mit einem Füllvolumen von 100 000 Volumenteilen wurden 100 000 Teile Stahlkugeln, 7200 Teile der in Beispiel B angegebenen 50%igen Lösung des Polyharnstoffurethans, 200 Teile Dispergierhilfsmittel, 166 Teile Gleitmittel, 16 000 Teile eines ferromagnetischen Chromdioxidpigments mit einer mittleren Teilchengröße von 0,5 µm und einer Koerzitivkraft von 50 kA/m und 18 000 Teile Tetrahydrofuran eingefüllt und etwa 24 Stunden dispergiert. Die Magnetdispersion wurde sodann unter Druck durch einen Filter von 5 µm Porenweite filtriert und unmittelbar von dem nachfolgenden Auftragen auf eine 15 µm starke Polyäthylenterephthalatfolie unter Rühren mit 1140 Teile einer 75%igen Lösung von Triisocyanat aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 60 und 90 °C getrocknet. Durch Hindurchführen zwischen beheizten Walzen (60 °C, Liniendruck 200 kg/cm) wurde die Magnetschicht verdichtet und geglättet. Die Dicke der Magnetschicht beträgt 4 µm. Die beschichtete Folie wurde anschließend in Bänder von 12,57 mm (½ Zoll) Breite geschnitten.

An diesem für den Videobereich vorgesehenen magnetischen Aufzeichnungsträgern wurden auf einem VHS-Recorder der Firma Victor Company of Japan gegen das Bezugsband (OdB) folgende Messungen durchgeführt:

(1) Videostörabstand (Video SN): Verhältnis des Luminanzsignals eines 100% Weißbildes zum Rauschpegel, gemessen mit dem Störspannungsmesser UPSF der Firma Rohde und Schwarz (> 100 kHz).

(2) Farbstörabstand (Farb SN): Verhältnis des Farbsignals einer Rotfläche zum Rauschpegel, gemessen mit dem Störspannungsmesser UPSF der Firma Rohde und Schwarz (100 kHz – 3 MHz).

(3) Fehlerzahl: Anzahl der Pegeleinbrüche von 20 dB mit einer Dauer von mehr als 15 µs pro Minute.

Die Meßergebnisse sind in der Tabelle 1 angegeben.

Vergleichsversuch

Es wurde wie in Beispiel 2 beschrieben verfahren, jedoch wurde anstelle des Polyharnstoffurethans gemäß Beispiel B ein gemäß DE-AS 1 295 011 nach dem Schmelzkondensationsverfahren hergestelltes Polyesterurethan in Tetrahydrofuran eingesetzt. Die Verarbeitung erfolgte wie in Beispiel 2 beschrieben. Die Prüfergebnisse sind in Tabelle 1 angegeben.

Tabelle 1

| | Video S/N [dB] | Farb S/N [dB] | Fehlerzahl [l/min] |
|---|---|---|---|
| Beispiel 2 | 2 | 2 | 15 |
| Vergl. Vers. | 0 | 0 | 30 |

Beispiel C

108,75 g Toluylendiisocyanat, gelöst in 108 g Tetrahydrofuran wurden auf 60 °C erhitzt und mit einem Tropfen Dibutylzinndilaurat versetzt. Dazu wurden innerhalb von 2,5 Stunden 150 g eines OH-gruppenhaltigen Polyesters aus Adipinsäure und Butandiol-1,4 mit einem Molekulargewicht von 1000 und 18,6 g Ethylenglykol und 4,47 g Trimethylolpropan, gelöst in 200 g Tetrahydrofuran gegeben. Nach einer Stunde wurde nochmals ein Tropfen Dibutylzinndilaurat zugegeben. Nach Erreichen eines NCO-Gehaltes von 1,78% wurde auf 45 °C abgekühlt und danach 26,25 g Diethanolamin zugesetzt. Das resultierende Produkt wies einen Feststoffgehalt von 50%, eine OH-Zahl von 91 und einen K-Wert von 24 auf.

Beispiel 3

In eine Stahlkugelmühle mit einem Inhalt von 600 Volumenteilen, gefüllt mit 600 kg Stahlkugeln mit einem Durchmesser zwischen 4 und 6 mm, wurden 102 kg Tetrahydrofuran, 31 kg einer 50%igen Lösung der Polyharnstoffurethane gemäß Beispiel C, 100 kg eines ferromagnetischen Chromdioxids mit einer mittleren Nadellänge von 0,5 µm, 2,5 kg Zinkoleat, 0,25 kg eines handelsüblichen Siliconöls sowie 1 kg n-Butylstearat eingefüllt und der Ansatz 36 Stunden dispergiert. Die Dispersion wurde dann unter Druck filtriert und unmittelbar vor dem Auftragen auf eine 15 µm dicke Polyethylenterephthalatfolie unter Rühren mit, bezogen auf ein Teil Dispersion, 0,039 Teilen einer 75%igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50 und 80 °C getrocknet und durch Hindurchführen zwischen beheizten Walzen unter Druck (60 °C, Liniendruck 200 kg/cm) geglättet.

Die Messung der magnetischen Eigenschaften wurde in einem Meßfeld von 160 kA/m durchgeführt: die remanente Magnetisierung betrug 178 mT und die Ausrichtung der magnetischen Teilchen, d.h. das Verhältnis der remanenten Magnetisierung längs zu quer, 3,0. Nach dem Schneiden von 3,81 mm breiten Bändern wurden die elektroakustischen Werte gemäß DIN 45401, 45403 und 45512 (Blatt 12) gegen das Bezugsband C401R geprüft. Die Meßergebnisse sind in der Tabelle 2 angegeben.

Beispiel D

53,1 g Toluylendiisocyanat und 75 g Diphenylmethyldiisocyanat, gelöst in 229 g Tetrahydrofuran wurden auf 60 °C erhitzt und mit einem Tropfen Dibutylzinndilaurat versetzt. Dazu wurden innerhalb von 2,5 Stunden 250 g eines OH-gruppenhaltigen Polyesters aus Adipinsäure und Butandiol-1,4 mit einem Molekulargewicht von 1000, 27,7 g Hexandiol und 1,34 g Trimethylolpropan, gelöst in 200 g Tetrahydrofuran, gegeben. Nach einer Stunde wurde nochmals ein Tropfen Dibutylzinndilaurat zugegeben. Nach Erreichen eines NCO-Gehaltes von 1,05% wurde auf 45 °C abgekühlt und danach 22,05 g Diethanolamin zugesetzt. Das resultierende Produkt wies einen Feststoffgehalt von 50%, eine OH-Zahl von 55 und einen K-Wert von 30 auf.

Beispiel 4

Es wurde wie in Beispiel 3 beschrieben verfahren, jedoch wurde anstelle des Polyharnstoffurethans, gemäß Beispiel C, dieselbe Menge eines gemäß Beispiel D eingesetzt.

Die Meßergebnisse sind in der Tabelle 2 angegeben.

Tabelle 2

| | Beispiel 3 | Beispiel 4 |
|---|---|---|
| Schichtdicke [µm] | 4,0 | 4,2 |
| Tiefenempfindlichkeit $E_T$ 315 Hz [ΔdB] | +1,5 | +1,7 |

Tabelle 2 (Fortsetzung)

| | Beispiel 3 | Beispiel 4 |
|---|---|---|
| Höhenempfindlichkeit $E_H$ 10 kHz [ΔdB] | +3,0 | +3,1 |
| Tiefenaussteuerbarkeit $A_T$ 315 Hz [ΔdB] | +3,1 | +3,3 |
| Höhenaussteuerbarkeit $A_H$ 10 kHz [ΔdB] | +3,2 | +3,3 |

**Patentansprüche**

1. Magnetischer Aufzeichnungsträger mit einer auf einem nichtmagnetischen Trägermaterial aufgetragenen Magnetschicht aus einer Dispersion eines anisotropen magnetischen Materials in einem organischen Bindemittel, im wesentlichen bestehend aus einem mit Polyisocyanat vernetzten OH-gruppenhaltigen Polyurethanbindemittel, wobei das Mengenverhältnis von magnetischem Material zu Bindemittel zwischen 1 bis 10 Gewichtsteilen, bezogen auf ein Gewichtsteil des Bindemittelgemisches liegt, dadurch gekennzeichnet, daß das Polyurethan ein thermoplastisches Polyharnstoffurethan mit einer OH-Zahl zwischen 10 und 120 und einem Molekulargewicht (Zahlenmittel) von 1000 bis 40 000 ist, welches aus

IA. 1 Mol eines Polydiols mit einem Molekulargewicht zwischen 400 und 4000,

IB. 0,2 bis 10 Mol eines Diols mit 2 bis 18 Kohlenstoffatomen,

IC. 0,1 bis 4 Mol eines primären oder sekundären Aminoalkohols mit 2 bis 20 Kohlenstoffatomen und

II. 1,20 bis 13 Mol eines Diisocyanats mit 6 bis 30 Kohlenstoffatomen, wobei der Anteil der NCO-Gruppen des Diisocyanats, bezogen auf die Komponenten IA bis IC, 65 bis 95% der äquivalenten Menge an OH- und NH-Gruppen beträgt,

hergestellt wird, mit der Maßgabe, daß der unpigmentierte vernetzte Film eine Reißfestigkeit nach DIN 53 455 von größer 15 N/mm², eine Reißdehnung nach DIN 53 455 von größer 30%, einen E-Modul nach DIN 53 457 von größer 150 N/mm² und eine Pendelhärte nach DIN 53 157 von 25 bis 140 s aufweist.

2. Magnetischer Aufzeichnungsträger mit einer auf einem nichtmagnetischen Trägermaterial aufgetragenen Magnetschicht aus einer Dispersion eines anisotropen magnetischen Materials in einem organischen Bindemittel, im wesentlichen bestehend aus einem mit Polyisocyanat vernetzten OH-gruppenhaltigen Polyurethanbindemittel, wobei das Mengenverhältnis von magnetischem Material zu Bindemittel zwischen 1 bis 10 Gewichtsteilen, bezogen auf ein Gewichtsteil des Bindemittelgemisches liegt, dadurch gekennzeichnet, daß das Polyurethan ein thermoplastisches Polyharnstoffurethan mit einer OH-Zahl zwischen 10 und 120 und einem Molekulargewicht (Zahlenmittel) von 1000 bis 40 000 ist, welches aus

IA. 1 Mol eines Polydiols mit einem Molekulargewicht zwischen 400 und 4000,

IB. 0,2 bis 9 Mol eines Diols mit 2 bis 18 Kohlenstoffatomen,

IC. 0,1 bis 4 Mol eines primären oder sekundären Aminoalkohols mit 2 bis 20 Kohlenstoffatomen und

ID. 0,01 bis 1 Mol eines Triols mit 3 bis 18 Kohlenstoffatomen und

II. 1,25 bis 13 Mol eines Diisocyanats mit 6 bis 30 Kohlenstoffatomen, wobei der Anteil der NCO-Gruppen des Diisocyanats, bezogen auf die Komponenten IA bis ID, 65 bis 95% der äquivalenten Menge an OH- und NH-Gruppen beträgt,

hergestellt wird, mit der Maßgabe, daß der unpigmentierte vernetzte Film eine Reißfestigkeit nach DIN 53 455 von größer 15 N/mm², eine Reißdehnung nach DIN 53 455 von größer 30%, einen E-Modul nach DIN 53 457 von größer 150 N/mm² und eine Pendelhärte nach DIN 53 157 von 25 bis 140 s aufweist.

3. Magnetischer Aufzeichnungsträger gemäß einem der Ansprüche 1 oder 2, dadurch gekennzeichnet, daß die Magnetschicht das mit Polyisocyanat vernetzte Polyurethanbindemittel als einziges Bindemittel enthält.

4. Magnetischer Aufzeichnungsträger gemäß einem der Ansprüche 1, 2 oder 3, dadurch gekennzeichnet, daß die Komponente IB ganz oder teilweise durch Diamine mit 2 bis 15 Kohlenstoffatomen ersetzt wird.

5. Magnetischer Aufzeichnungsträger gemäß einem der Ansprüche 1, 2 oder 3, dadurch gekennzeichnet, daß die Komponente IB ganz oder teilweise durch primäre oder sekundäre Aminoalkohole mit 2 bis 20 Kohlenstoffatomen ersetzt wird.

6. Magnetischer Aufzeichnungsträger gemäß einem der Ansprüche 1, 2 oder 3, dadurch gekennzeichnet, daß die Komponente IB ganz oder teilweise durch Wasser ersetzt wird.

**Claims**

1. A magnetic recording medium which comprises a magnetic layer which has been applied atop a non-magnetic base and consists of a dispersion of an anisotropic magnetic material in an organic binder consisting essentially of an OH-containing polyurethane binder crosslinked with a polyisocyanate, the ratio of magnetic material to binder being from 1 to 10 parts by weight per part by weight of binder mixture, wherein the polyurethane is a thermoplastic polyurea-urethane which has an OH number of from 10 to 120, a

number average molecular weight of from 1,000 to 40,000 and is obtained from

IA. 1 mole of a polydiol having a molecular weight of from 400 to 4,000,

IB. from 0.2 to 10 moles of a diol of 2 to 18 carbon atoms,

IC. from 0.1 to 4 moles of a primary or secondary aminoalcohol of 2 to 20 carbon atoms and

II. from 1.20 to 13 moles of a diisocyanate of 6 to 30 carbon atoms, the proportion of NCO groups in the diisocyanate being from 65 to 95%, based on components IA to IC, of the equivalent amount of OH and NH groups, with the proviso that the unpigmented crosslinked film has a tensile strength (according to DIN 53,455) greater than 15 N/mm$^2$, an elongation at break (according to DIN 53,455) greater than 30%, a modulus of elasticity (according to DIN 53,457) greater than 150 N/mm$^2$ and a pendulum hardness (according to DIN 53,157) of from 25 to 140 sec.

2. A magnetic recording medium which comprises a magnetic layer which has been applied atop a non-magnetic base and consists of a dispersion of an anisotropic magnetic material in an organic binder consisting essentially of an OH-containing polyurethane binder crosslinked with a polyisocyanate, the ratio of magnetic material to binder being from 1 to 10 parts by weight per part by weight of binder mixture, wherein the polyurethane is a thermoplastic polyurea-urethane which has an OH number of from 10 to 120, a number average molecular weight of from 1,000 to 40,000 and is obtained from

IA. 1 mole of a polydiol having a molecular weight of from 400 to 4,000,

IB. from 0.2 to 9 moles of a diol of 2 to 18 carbon atoms,

IC. from 0.1 to 4 moles of a primary or secondary aminoalcohol of 2 to 20 carbon atoms,

ID. from 0.01 to 1 mole of a triol of 3 to 18 carbon atoms and

II. from 1.25 to 13 moles of a diisocyanate of 6 to 30 carbon atoms, the proportion of NCO groups in the diisocyanate being from 65 to 95%, based on components IA to ID, of the equivalent amount of OH and NH groups, with the proviso that the unpigmented crosslinked film has a tensile strength (according to DIN 53,455) greater than 15 N/mm$^2$, an elongation at break (according to DIN 53,455) greater than 30%, a modulus of elasticity (according to DIN 53,457) greater than 150 N/mm$^2$ and a pendulum hardness (according to DIN 53,157) of from 25 to 140 sec.

3. A magnetic recording medium as claimed in claim 1 or 2, wherein the polyisocyanate-crosslinked polyurethane binder is the only binder in the magnetic layer.

4. A magnetic recording medium as claimed in claim 1 or 2 or 3, wherein some or all of component IB is replaced by a diamine of 2 to 15 carbon atoms.

5. A magnetic recording medium as claimed in claim 1 or 2 or 3, wherein some or all of component IB is replaced by a primary or secondary aminoalcohol of 2 to 20 carbon atoms.

6. A magnetic recording medium as claimed in claim 1 or 2 or 3, wherein some or all of component IB is replaced by water.

**Revendications**

1. Support d'enregistrement magnétique comportant, appliquée sur un matériau support non magnétique, une couche magnétique d'une dispersion d'un matériau magnétique anisotrope dans un liant organique, en principe constitué d'un liant de polyuréthane à groupes OH, réticulé avec du polyisocyanate, le rapport quantitatif du matériau magnétique au liant étant compris entre 1 et 10 parties en poids, rapporté à une partie en poids du mélange de liant, caractérisé par le fait que le polyuréthane est un polyuréeuréthane thermoplastique d'un indice OH compris entre 10 et 120 et d'un poids moléculaire (moyenne en nombre) de 1000 à 40 000, qui est préparé à partir de

IA. 1 mole d'un polydiol d'un poids moléculaire compris entre 400 et 4000,

IB. 0,2 à 10 moles d'un diol ayant 2 à 18 atomes de carbone

IC. 0,1 à 4 moles d'un aminoalcool primaire ou secondaire ayant 2 à 20 atomes de carbone, et

II. 1,20 à 13 moles d'un diisocyanate ayant 6 à 30 atomes de carbone, la proportion des groupes NCO du diisocyanate, rapportée aux composants IA à IC, étant de 65 à 95% de la quantité équivalente de groupes OH et NH,

avec la condition que le film réticulé, non pigmenté, possède une résistance en traction, selon DIN 53455, supérieure à 15 N/mm$^2$, un allongement en traction, selon DIN 53455, supérieur à 30%, un module E, selon DIN 53457, supérieur à 150 N/mm$^2$ et une dureté au pendule, selon DIN 53157, de 25 à 140 s.

2. Support d'enregistrement magnétique comportant, appliquée sur un matériau support non magnétique, une couche magnétique d'une dispersion d'un matériau magnétique anisotrope dans un liant organique, en principe constitué d'un liant de polyuréthane à groupes OH, réticulé avec du polyisocyanate, le rapport quantitatif du matériau magnétique au liant étant compris entre 1 et 10 parties en poids, rapporté à une partie en poids du mélange de liant, caractérisé par le fait que le polyuréthane est un polyuréeuréthane thermoplastique d'un indice OH compris entre 10 et 120 et d'un poids moléculaire (moyenne en nombre) de 1000 à 40 000, qui est préparé à partir de

IA. 1 mole d'un polydiol d'un poids moléculaire compris entre 400 et 4000,

IB. 0,2 à 9 moles d'un diol ayant 2 à 18 atomes de carbone

IC. 0,1 à 4 moles d'un amino alcool primaire ou secondaire ayant 2 à 20 atomes de carbone et

ID. 0,01 à 1 mole d'un triol ayant 3 à 18 atomes de carbone et

II. 1,25 à 13 moles d'un diisocyanate ayant 6 à 30 atomes de carbone, la proportion des groupes NCO de diisocyanate, rapportée aux composants IA à IC, étant de 65 à 95% de la quantité équivalente de groupes OH et NH,

avec la condition que le film réticulé, non pigmenté, possède une résistance en traction, selon DIN 53455, supérieure à 15 $N/mm^2$, un allongement en traction, selon DIN 53455 supérieur à 30%, un module E, selon DIN 53457, supérieur à 150 $N/mm^2$ et une dureté au pendule, selon DIN 53157, de 25 à 140 s.

3. Support d'enregistrement magnétique selon l'une des revendications 1 ou 2, caractérisé par le fait que la couche magnétique contient comme unique liant le liant de polyuréthane réticulé avec du polyisocyanate.

4. Support d'enregistrement magnétique selon l'une des revendications 1, 2 ou 3, caractérisé par le fait que le composant IB est remplacé totalement ou partiellement par de la diamine ayant 2 à 15 atomes de carbone.

5. Support d'enregistrement magnétique selon l'une des revendications 1, 2 ou 3, caractérisé par le fait que le composant IB est remplacé totalement ou partiellement par de l'alcool primaire ou secondaire ayant 2 à 20 atomes de carbone.

6. Support d'enregistrement magnétique selon l'une des revendications 1, 2 ou 3, caractérisé par le fait que le composant IB est remplacé totalement ou partiellement par de l'eau.